# EUROPEAN PATENT SPECIFICATION

(11) **EP 2 198 326 B1**
(45) Date of publication and mention of the grant of the patent: **07.05.2014**
(21) Application number: 08832325.8
(22) Date of filing: 19.09.2008
(51) Int. Cl.: G02B 5/20

(54) **Color filter, method of fabricating the same and display device**
Farbfilter, Verfahren zu dessen Herstellung und Anzeige
Filtre de couleurs, procédé pour sa fabrication et dispositif afficheur

(30) Priority: 21.09.2007 KR 20070096231; 19.03.2008 KR 20080025306
(43) Date of publication of application: 23.06.2010
(73) Proprietor: LG Display Co., Ltd., Seoul 150-721 (KR)
(72) Inventor: KIM, Chul Hwan, Daejeon-city 302-765 (KR); LEE, Yong Eui, Seongnam-city Gyeonggi-do 463-921 (KR)
(74) Representative: Viering, Jentschura & Partner Patent- und Rechtsanwälte
(86) International application number: PCT/KR2008/005577
(87) International publication number: WO 2009/038398

(56) References cited:
- WO-A2-01/96945
- JP-A- 63 184 704
- KR-A- 20010 001 456
- US-A- 5 609 978
- US-A1- 2002 102 480
- US-A1- 2004 212 600
- US-B2- 6 686 105

## Description

The present invention relates to display device technology, and more particularly, to a color filter, a method of fabricating the same, and a display device including the color filter.

### BACKGROUND ART

As the market for electronic devices including a display device, such as, a personal computer (PC), a visual entertainment system, a mobile phone, a portable digital assistant (PDA), and a portable moving picture player, has recently expanded, display devices, such as a liquid crystal display (LCD), a field emission display (FED), an electrophoretic display (EPD), a liquid toner display, and a magnetic ball display, have been actively developed. Among the display devices, the EPD, the liquid toner display, and the magnetic ball display are next generation display devices that can be used as electronic paper because of their excellent portability and flexibility.

Such display devices employ a color filter that forms an image with colors by transmitting or reflecting light. Conventional methods, such as dyeing, pigment dispersion, and electro deposition, have been used to fabricate color filters. These conventional methods have recently given way to inkjet printing that can form an image with two and more colors through one printing process. However, the inkjet printing has a problem in that since a coloring agent formulation is quickly hardened, the coloring agent formulation degrades or thickens before being dispersed onto a substrate. The Inkjet printing has another problem in that since it is difficult to control the amount of ink ejected through inkjet nozzles and crosstalk between the nozzles often occurs, it is difficult to fabricate a color filter with uniform color distribution.

### DETAILED DESCRIPTION OF THE INVENTION

### TECHNICAL PROBLEM

The present invention provides a color filter, which can ensure high productivity by producing two and more colors in a single process irrespective of colors of pixels and can provide excellent color expression by securing uniformity in the transmittance, color reproduction, and filter thickness of pixels having their respective colors.

The present invention also provides a display device including the color filter.

### TECHNICAL SOLUTION

According to an aspect of the present invention, there is provided a color filter as defined in claim 1.

The substrate may comprise at least one selected from the group consisting of glass, ceramic, crystalline material, and polymer resin. The polymer resin may comprise any one selected from the group consisting of triacetyl-cellulose, cyclo-olefin polymer (COP), polyethylene terephthalate, polycarbonate, polymethyl methacrylate, polybutyl acrylate, polyarylate, polyacrylate, polyethylene naphthalate, polybutylene terephthalate, polyimide, and a combination thereof.

The light sensitive color developing layers may comprise at least one of a cyan color developing layer, a magenta color developing layer, and a yellow color developing layer. The partial color developing regions of the cyan color developing layer, the magenta color developing layer, and the yellow color developing layer may overlap one another to form pixel separation regions. The color filter may further comprise a patterned matrix layer formed on the substrate. The matrix layer may be formed of any one selected from the group consisting of a black silver colloid, a resin-based material, and an anti-reflective metal. The color filter may further comprise a protective layer formed on the light sensitive color developing layers.

According to another aspect of the present invention, there is provided a display device comprising the color filter as defined in claim 9. The display device may further comprise a light emitting element formed on or in the substrate. The display device may further comprise a driving element formed on or in the substrate.

### ADVANTAGEOUS EFFECTS

Since a color filter according to the present invention includes light sensitive color developing layers that can be uniformly formed, uniformity in the transmittance, color reproduction, and thickness of pixels having their respective colors can be obtained. Also, a display device according to the present invention can provide an image with excellent color reproduction by using the color filter.

Since a method of fabricating a color filter according to the present invention simultaneously implements pixel portions of two and more, preferably all colors irrespective of colors of pixels through a light exposure process, high productivity of the color filter can be ensured.

### DESCRIPTION OF THE DRAWINGS

FIG. 1 is a flowchart illustrating a method of fabricating a color filter, according to an embodiment of the present invention.
FIGS. 2A through 2C are cross-sectional views of printing support structures each used by the method of FIG. 1, according to embodiments of the present invention.
FIGS. 3A and 3B are schematic views of exposure devices each used by the method of FIG. 1, according to embodiments of the present invention.
FIG. 4 is a cross-sectional view of a color filter fabricated by the method of FIG. 1, according to an embodiment of the present invention.
FIG. 5 is a cross-sectional view of an electrophoretic display (EPD) device including a color filter, according to an embodiment of the present invention.

### BEST MODE

The present invention will now be described more fully with reference to the accompanying drawings, in which exemplary embodiments of the invention are shown.

It will be understood that when a layer is referred to as being "on" another layer or a substrate, it can be directly on the other layer or the substrate, or intervening layers may also be present therebetween.

In the drawings, the thicknesses of layers and regions and the sizes of components may be exaggerated for clarity, and like reference numerals refer to like elements throughout. As used herein, the term "and/or" includes any and all combinations of one or more of the associated listed items.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another region, layer or section. Thus, a first element, component, region, layer, or section discussed below could be termed a second element, component, region, layer, or section without departing from the teachings of example embodiments.

Example embodiments are described herein with reference to schematic illustrations of desired example embodiments. As such, variations from the shapes of the illustrations as a result, for example, of manufacturing techniques and/or tolerances, are to be expected.

The term "light" used herein refers to actinic radiation including ultraviolet rays and infrared rays, which can cause a chemical reaction such as oxidation, reduction, or photolysis, as well as visible light. Also, the term "transparent" used herein refers to having transparency enough to be commercially applicable in all bands of the light or a specific band of the light, e.g., a blue band, a green band, or a red band. The term "blue band" used herein refers to a range of frequencies between about 370 and about 500 nm, "green band" refers to a range of frequencies between about 500 and about 570 nm, and "red band" refers to a range of frequencies between about 570 and about 750 nm.

A region of the light sensitive color developing layer which is exposed to light transmitted through a color film and thereafter shows a respective color through a developing process, is referred C to as a partial color developing region herein.

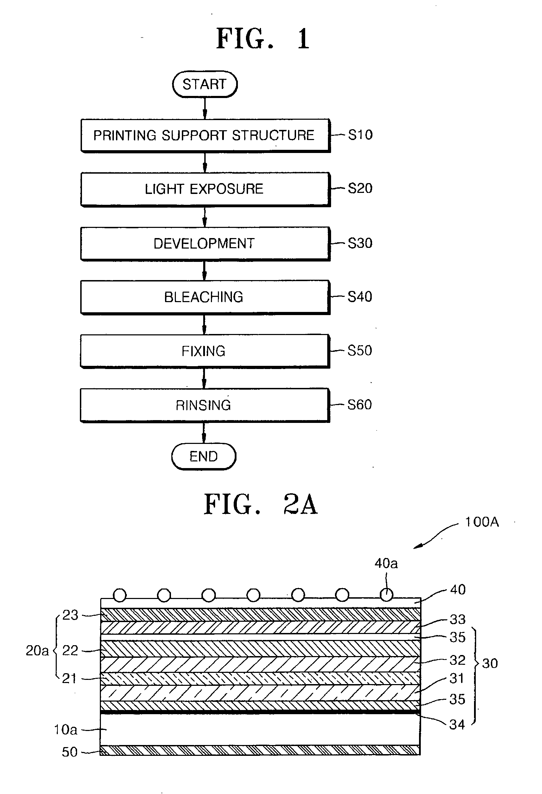

FIG. 1 is a flowchart illustrating a method of fabricating a color filter, according to an embodiment of the present invention. FIGS. 2A through 2C are respectively cross-sectional views of printing support structures 100A, 100B, and 100C for fabricating the color filter, according to various embodiments of the present invention.

Referring to FIGS. 1 and 2A, there is provided a printing support structure 100A including a substrate 10a and light sensitive color developing layers 20a comprising one or more light sensitive color developing layers 21, 22, and 23 which are stacked on the substrate 10a. The substrate 10a may be formed of a transparent inorganic material with high strength, such as glass, crystal, or metal oxide.

Alternatively, the substrate 10a may be formed of a flexible transparent material, such as a polymer resin material, in order to be used for a flexible display panel. The flexible transparent material may include any one selected from the group consisting of triacetyl-cellulose, cyclo-olefin polymer (COP), polyethylene terephthalate, polycarbonate, polymethyl methacrylate, polybutyl acrylate, polyarylate, polyacrylate, polyethylene naphthalate, polybutylene terephthalate, polyimide, and a combination thereof. Alternatively, the substrate 10a may have a composite structure in which a layer formed of at least one transparent inorganic material and a layer formed of at least one polymer resin material are stacked.

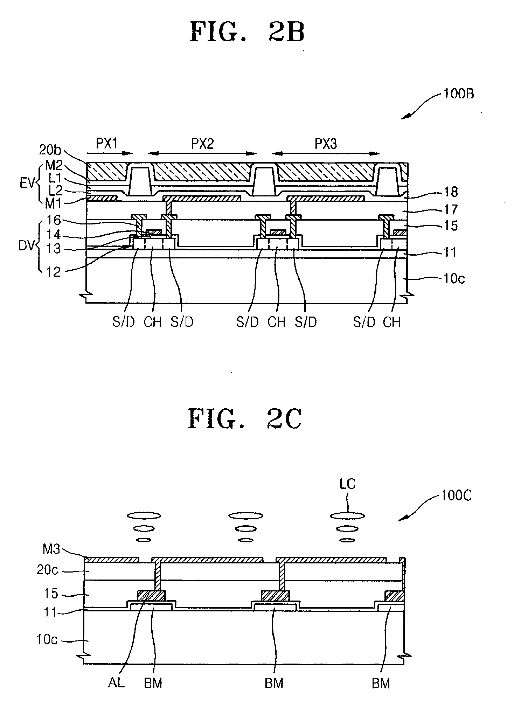

According to another embodiment, a light emitting element may be disposed between the substrate 10a and the light sensitive color developing layers 21, 22, and 23 to provide a self-emissive display device. The light emitting element may be formed on or in the substrate 10a. Optionally, a driving element, such as a thin film transistor (TFT), for driving the light emitting element may be disposed in the substrate 10a. FIG. 2B is a cross-sectional view illustrating the printing support structure 100B including an organic light emitting diode (OLED) formed on a substrate 10b.

Referring to FIG. 2B, the substrate 10b may be a transparent substrate such as a glass substrate, or a single-crystalline or polycrystalline ceramic substrate commonly used in a semiconductor manufacturing process. An underlayer 11, such as a silicon nitride layer or a silicon oxide layer, may be formed as a buffer layer on the substrate 10b. A semiconductor layer 12 formed of polysilicon and including channel regions CH and source/drain regions S/D, may be formed on the underlayer 11, and a gate insulating layer 13 and gate electrodes 14 may be sequentially stacked on the semiconductor layer 12. An interlayer insulating layer 15 made of, for example, a silicon oxide by plasma chemical vapor deposition (CVD) may be formed on the gate electrodes 14. Source/drain electrodes 16 electrically connected to the source/drain regions S/D formed in the semiconductor layer 12 may be disposed on the interlayer insulating layer 15. A passivation layer 17 formed of a silicon nitride may cover the source/drain electrodes 16.

The semiconductor layer 12, the gate insulating layer 13, the source/drain electrodes 16, and the gate electrodes 14 may constitute a TFT DV. A scan signal line (not shown) may be connected to the gate electrodes 14 and an image signal line (not shown) may be connected to the source/drain electrodes 16 such that the TFT EV can function as an active matrix type driving elements for driving an OLED EV discussed below.

A plurality of first electrodes M1 are arranged in parallel on the passivation layer 17 while being spaced apart from one another on a pixel-by-pixel basis. The first electrodes M1 are anodes and may be transparent conductive layers, such as indium tin oxide (ITO) or indium zinc oxide (IZO). The first electrodes M1 are electrically connected to the source/drain electrodes 16 through via holes formed in the passivation layer 17. An insulating layer 18 for insulating the first electrodes M1 may be formed on the passivation layer 17, and ribs 19 for defining pixel regions PX1, PX2, and PX3 may be provided on the insulating layer 18.

A light emitting layer L1 made of an organic material may be formed on portions of the first electrodes M1 which are not covered by the insulating layer 18. A buffer layer L2 for injecting holes into the light emitting layer L1 may be formed between the light emitting layer L1 and the first electrodes M1. A second electrode M2 is disposed on the light emitting layer L1. The first electrodes M1, the second electrode M2, and the light emitting layer L1 interposed between the first and second electrodes M1 and M2 may constitute the OLED EV.

If the light emitting layer L1 is an organic layer having a single band gap which can emit a single color of light, e.g., blue light, one or more light sensitive color developing layers 20b may be formed on the second electrode M2 in order to manufacture a display device that can form a color image. In this case, the light sensitive color developing layers 20b may be formed in the pixel regions PX1, PX2, and PX3 defined by the ribs 9 as shown in FIG. 2B. A planarizing layer (not shown) may be provided in the ribs 19 and the light sensitive color developing layers 20b may be formed on the planarizing layer. The light sensitive color developing layers 20b are processed to be a color filter through exposure and development discussed below.

According to another embodiment, in order to provide a double sided emission type light emitting element, the light sensitive color developing layers 20b may be also formed on a bottom surface of the substrate 10b. The OLED EV is disposed between the substrate 10b and the light sensitive color developing layers 20b in FIG. 2B. A self-emissive light emitting element, such as an inorganic light emitting device, may be disposed between the substrate 10b and the light sensitive color developing layers 20b.

According to another embodiment, a non-emissive display device, such as a liquid crystal display (LCD), may be provided by forming only a driving element, such as the aforesaid TFT, on or in the substrate 10b. FIG. 2C is a cross-sectional view of the printing support structure 100C including light sensitive color developing layers 20c disposed over a substrate 10c on which a driving element is formed, which can be applied to a non-emissive display device.

Referring to FIG. 2C, an array layer AL including a driving element, which is the same as or similar to the TFT DV of FIG. 2B, is formed on the substrate 10c. A black matrix layer BM may be formed over the substrate 10c. The light sensitive color developing layers 20c having the same structure as that of the light sensitive color developing layers 20a of FIG. 2A may be formed on the array layer AL. An interlayer insulating layer 15 may be disposed between the array layer AL and the light sensitive color developing layers 20c. Pixel electrodes M3 electrically connected to the TFT of the array layer AL may be formed on the light sensitive color developing layers 20c. The light sensitive color developing layers 20c are used to form a color filter through exposure and development discussed below.

Once the color filter is formed, an LCD device may be manufactured by aligning another substrate including a common electrode (not shown) facing the pixel electrodes M3 with the substrate 10c and filling liquid crystal molecules LC between the another substrate and the substrate 10c. If the color filter is implemented by forming the light sensitive color developing layers 20c on the array layer AL including the driving element in such a manner, a color filter-on-array (COA) type LCD device can be obtained to solve misalignment between the driving element and data wiring, and the color filter.

The aforementioned display device is exemplary, and positions, shapes, and structures of the substrate and the light sensitive color developing layers for forming the color filter may properly vary depending on the display device. Also, although the light emitting element and/or the driving element are described to be separate members in order to provide the self-emissive display device and the non-emissive display device in FIGS. 2A through 2C, these elements, the element layer including these elements, and the substrate may be respectively or collectively referred to as a substrate herein. The light sensitive color developing layers 20a, 20b, and 20c of FIGS. 2A through 2C will now be explained in detail.

In agreement with the present invention the light sensitive color developing layers 20a, 20b, and 20c comprise one or more light sensitive color developing layers 21, 22, and 23 illustrated in FIG. 2A, each formed of a material that can develop specific color through exposure and development as to be discussed below. Referring to FIG. 2A, each of the light sensitive color developing layers 21, 22, and 23 includes a dispersed dye forming coupler, silver halide crystal grains, and a binder for binding the dye forming coupler with the silver halide crystal grains, like a silver halide emulsion layer used for general color photographic paper. Alternatively, the light sensitive color developing layers 21, 22, and 23 may include non-silver based photographic materials, such as chrome salt, ferric chloride II, diazo compound, and σ-quinine diazide, instead of or as well as the silver halide crystal grains.

The binder may be a film forming agent, such as gelatin, alginic acid, or latex polymer. Each of the light sensitive color developing layers 21, 22, and 23 may be formed by preparing a colloid in which the dye forming coupler and the silver halide crystal grains are uniformly dispersed in a well-known appropriate solvent and, then, coating the colloid on the substrate 10a. Alternatively, each of the light sensitive color developing layers 21, 22, and 23 may be formed by preparing a colloid in the form of a solid film and, then, adhering or laminating the colloid to the substrate 10a. The light sensitive color developing layers 21, 22, and 23 may have uniform thickness because they are stacked on the substrate 10a as the coated layer or solid film, and color developing elements, that is, the dye forming coupler and the silver halide crystal grains, may be uniformly distributed in the light sensitive color developing layers 21, 22, and 23.

In an embodiment of the present invention, the light sensitive color developing layers 21, 22 and 23 may be sensitive to one of red band, green band and blue band which constitute primary color. For example, the light sensitive color developing layer 21 may be a red light sensitive color developing layer that is sensitive to a red band, the light sensitive color developing layer 22 may be a green light sensitive color developing layer that is sensitive to a green band, and the light sensitive color developing layer 23 may be a blue light sensitive color developing layer that is sensitive to a blue. In this case, a cyan (C) dye coupler, a magenta (M) dye coupler, and a yellow (Y) dye coupler may be included in the light sensitive color developing layers 21, 22, and 23, respectively.

In order to provide the C dye coupler, for example, a phenol coupler, a naphtol coupler, or their derivative coupler may be used. In order to provide the M dye coupler, for example, a pyrazolone coupler, a cyanoacethyl coupler, or their derivative coupler may be used. In order to provide the Y dye coupler, an acylacetamide coupler or its derivative coupler may be used.

Since the three light sensitive color developing layers 21, 22, and 23 are respectively sensitive to three primary regions of a visible light spectrum, a color filter which can form a full color image by subtractive color mixing method, can be provided. The dye couplers and the silver halide crystal grains contained in the light sensitive color developing layers 21, 22, and 23, and the color filter may be provided by additive color mixing method by using appropriate color elements.

In another embodiment, the color filter may have a structure in which any one or two of the light sensitive color developing layers 21, 22 and 23 may be stacked on the substrate 10a. In order to realize a full color filter having all red, green, and blue pixels in such a printing support structure 100 where one or two light sensitive color developing layers are omitted, pixel elements in place of the omitted light sensitive color developing layers may be required. For example, if the blue light sensitive color developing layer 23 that is exposed to a blue band so as to develop a yellow color is omitted, the printing support structure 100A may further include a filter layer having a yellow pixel pattern. Optionally, a substrate for blocking a blue band may be used instead of the filter layer having the yellow pixel pattern.

Although the light sensitive color developing layers 21, 22, and 23 are sequentially stacked on the substrate 10a in FIG. 2A, the printing support structure 100A is not limited to the stacking order of the light sensitive color developing layers 21, 22, and 23. For example, if the three light sensitive color developing layers 21, 22, and 23 are stacked as shown in FIG. 2A, the stacking order of the three light sensitive color developing layers 21, 22, and 23 may be arbitrary. Accordingly, the blue light sensitive color developing layer 23 may lie uppermost, midway, or lowermost, and it is the case for the position of the red light sensitive color developing layers 21 and the green light sensitive color developing layers22.

The light sensitive color developing layers 21, 22, and 23 each sensitive to a specific band of a spectrum may be formed as single layer or multiple layers as well known in photography technology. In order to improve the color reproduction of the color filter, the printing support structure 100A may further include an additional layer 30, for example, a yellow filter layer 35 for assisting the blue light sensitive color developing layer 23.

When the light sensitive color developing layers 21, 22, and 23 having different colors are stacked on the substrate 10a as described above, the printing support structure 100A may further include an additional layer 30, such as anti-crosstalk interlayers 31, 32, and 33 formed between the light sensitive color developing layers 21, 22, and 23 in order to prevent chemical crosstalk from occurring when a developer oxidized in one light sensitive color developing layer moves to react with a dye coupler of another light sensitive color developing layer.

The anti-crosstalk interlayers 31, 32, and 33 may include a non-light sensitive interlayer. The non-light sensitive interlayer may include a well-known reducing agent called a scavenger that reduces the oxidized developer. For example, the reducing agent included in the non-light sensitive interlayer may be an organic reducing agent that includes hydroquinone or a derivative thereof. Optionally, each of the anti-crosstalk interlayers 31, 32, and 33 may be a well-known low speed light sensitive layer including an appropriate dye coupler and silver halide crystal grains containing more than 90 % silver chloride, instead of the scavenger or along with a small amount of the scavenger.

In an embodiment, the printing support structure 100A may further include an absorbing layer 34 formed between the substrate 10a and the light sensitive color developing layers 20a as shown in FIG. 2A. The absorbing layer 34 prevents crosstalk from occurring when light transmitted through the light sensitive color developing layers 21, 22, and 23 is reflected by a surface of the substrate 10 to adjacent areas of the light sensitive color developing layers 21, 22, and 23 during exposure.

The printing support structure 100A may also include a patterned matrix layer 35 formed on the substrate 10a in order to increase the contrast ratio of the color filter. For example, the matrix layer 35 may be interposed between the substrate 10a and the light sensitive color developing layers 20a. The matrix layer 35 may be formed of an anti-reflective metal, such as a black silver colloid, a resin-based material, or chromium. Alternatively, the matrix layer 35 may include an opaque black material such as carbon black or organic pigment to form a black matrix.

In order to form the matrix layer 35, a matrix material layer may be coated on the substrate 10a, and, then, may be patterned so as to separate pixel units of the color filter by photolithography and etching. Alternatively, the matrix layer 35 may be earlier manufactured and then may be laminated to the substrate 10a.

The printing support structure 100 may further include a protective layer 40 formed on the light sensitive color developing layers 20a. The protective layer 40 may provide optical characteristics to improve the light sensitive characteristics of the light sensitive color developing layers 21, 22, and 23 during exposure in operation S20 by absorbing or reflecting ultraviolet rays incident from a light source. The protective layer 40 may also provide mechanical characteristics, such as abrasion durability, to lengthen the life time and prevent abrasion or scratch from occurring when the color filter is handled wrongly. The protective layer 40 may also provide surface characteristics, such as hydrophilic or hydrophobic characteristics, required according to the kind of a display device to which the color filter is applied. Accordingly, the protective layer 40 may be formed of any of various well-known materials 40a according to the required optical, mechanical, or surface characteristics.

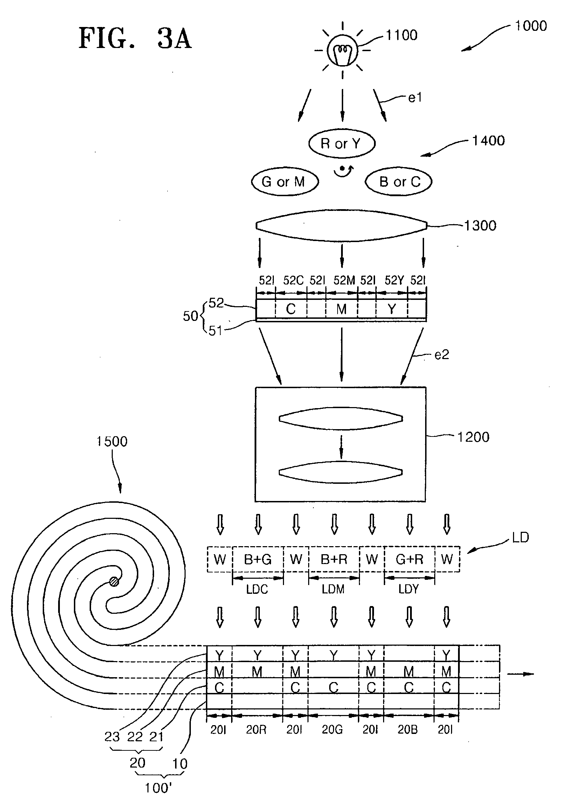

The protective layer 40 may be provided on the printing support structure 100A and then subjected to subsequent exposure and development, or after exposure and development, the protective layer 40 may be stacked on the printing support structure 100A. The printing support structure 100 may further include an anti-electrification layer 50 stacked under the substrate 10a, and/or on the protective layer 40. The anti-electrification layer 50 prevents the charge up of electrostatic charges when a printing support structure 100A is provided in the form of a roll as shown in FIG. 3A.

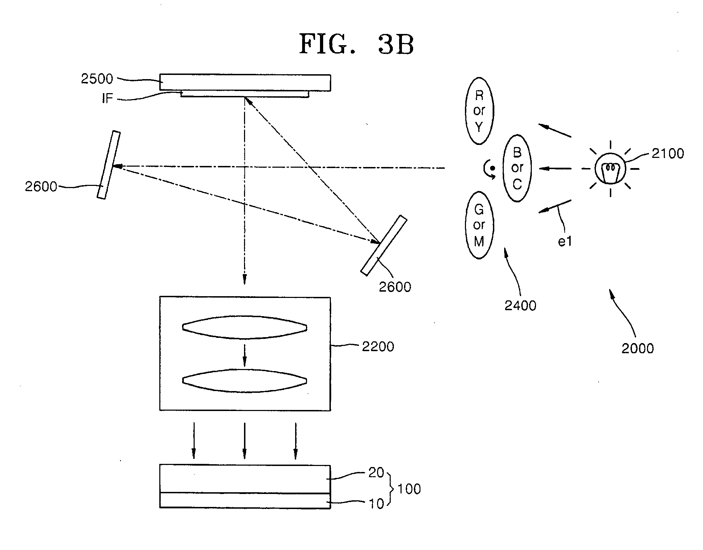

Referring to FIG. 1, in operation S20, an exposure process may be performed by transferring a pixel pattern image to the prepared printing support structure 100A. FIGS. 3A and 3B are schematic views of exposure devices 1000 and 2000, according to embodiments of the present invention.

An exposure process and the exposure devices 1000 and 2000 for performing the exposure process will now be explained with reference to FIGS. 3A and 3B. The exposure process of operation S20 may be performed by a printing method using a color film 50 as shown in FIG. 3A or a digital printing method using an image frame IF obtained from pixel pattern image information stored as electronic information as shown in FIG. 3B. In FIGS. 3A and 3B, Y, M, and C denote yellow, magenta, and cyan, respectively, and R, G, B, and W denote red, green, blue, and white, respectively.

Referring to FIG. 3A, the color film 50 includes a pixel pattern image to be transferred to a light sensitive color developing layers 20 of the printing support structure 100'. The color film 50 may be a well-known positive or negative film, and as illustrated in FIG. 3A, may include a base layer 51 and a light sensitive emulsion layer 52 having the pixel pattern image formed on the base layer 51.

The pixel pattern image of the color film 50 may include an array of a C pattern portion 52C, an M pattern portion 52M, and a Y pattern portion 52Y in order to provide printing using subtractive color mixing. The color filter 50 may further include pattern separation regions 52I that separate the C pattern portion 52C, the M pattern portion 52M, and the Y pattern portion 52Y at predetermined intervals. In this case, the pattern separation regions 521 may be transparent to white light.

If light e1 is emitted to an opposite surface of the color film 50 to the printing support structure 100', light e2 passes through the color film 50 and is subjected to color separation to have optical distribution characteristics LD such that the light e2 is projected to the light sensitive color developing layers 21, 22, and 23 of the printing support structure 100'. It is assumed that the light sensitive color developing layers 20 include a red light sensitive color developing layer 21, a green light sensitive color developing layer 22, and a blue light sensitive color developing layer 23 which are stacked on a substrate 10.

If the light e1 is white light, a red band of the light e1 may be blocked by the C pattern portion 52C of the color film 50 and light LDC having green and blue bands passes through the C pattern portion 52C and may be projected to a part of the light sensitive color developing layers 21, 22, and 23 of the stacked structure 20 corresponding to the C pattern portion 52C. The part of the light sensitive color developing layers 22 and 23 corresponding to the C pattern portion 52C is exposed to the light LDC to define a first partial color developing region 20R. Likewise, a green band of the light e1 is blocked by the M pattern portion 52M of the color film 50, and light LDM having blue and red bands passes through the M pattern portion 52M and a part of the red light sensitive color developing layer 21 and the blue light sensitive color developing layer 23 corresponding to the M pattern portion 52M may be exposed to the light LDM to define a second partial color developing region 20G. A blue band of the light e1 may be blocked by the Y pattern portion 52Y of the color film 50, and light LDY having red and green bands passes through the Y pattern portion 52Y and a part of the red light sensitive color developing layer 21 and the green light sensitive color developing layer 22 corresponding to the Y pattern portion 52Y may be exposed to the light LDY to define a third partial color developing layer 20B.

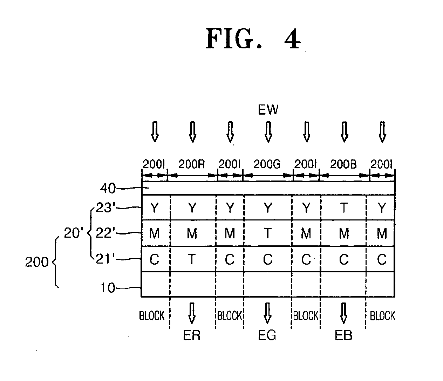

If the color film 50 has the pattern separation regions 52I and the pattern separation regions 521 are transparent to the white light, parts of the light sensitive color developing layers 21, 22, and 23 of the printing support structure 100' corresponding to the pattern separation regions 521 may be exposed to the white light to form fourth partial color developing regions 201. The first through fourth partial color developing regions 20R, 20G, 20B, and 201 form pixel portions 200R, 200G, and 200B (see FIG. 4) having different colors and pixel separation regions 2001 through a development process performed in operation S30.

The exposure process of operation S20 may be performed by using the exposure device 1000, which is called a magnifier, and various modifications thereof. The exposure device 1000 may include a light source unit 1100 including a tungsten or halogen lamp that provides the light e1 necessary for exposure, a film fixing unit (not shown) supporting the color film 50, and a lens system 1200 disposed between the color film 50 and the printing support structure 100'. The lens systems 1200 may enlarge or reduce the pixel pattern image of the color film 50 to project the enlarged or reduced pixel pattern image to the light sensitive color developing layers 20 of the printing support structure 100'.

The exposure device 1000 may further include a condensing unit 1300 that may be disposed in an optical path between the color film 50 and the light source unit 1100 and adapted to condense the light e1 emitted by the light source unit 1100 and uniformly disperse the light e1 to the color film 50. The exposure device 1000 may further include at least one of R, G, and B filters and Y, M, and C filters 1400 for color separation using additive and/or subtractive color mixing. In other examples, the filters 1400 may be disposed in an optical path between the color film 50 and the printing support structure 100'.

In an embodiment, the exposure device 1000 may further include a printing support structure supplying unit 1500 for continuously supplying the printing support structure 100'. The printing support structure supplying unit 1500 may include a driving element (not shown) that supplies the printing support structure 100' by rolling out the printing support structure 100'.

Directions of the color film 50 and/or the printing support structure 100' during the exposure process of operation S20 may be appropriately determined. For example, the color film 50 may be disposed so that the base layer 51 faces the light source unit 1100 and the film emulsion unit 52 faces the printing support structure 100'.

Referring to FIG. 3B, a printing support structure 100 may be exposed by a digital printing method using pixel pattern image information. For example, the digital exposure device 2000 performing the digital printing method may include a light source unit 2100, a display device 2500, such as an LCD, a plasma display panel, and a cathode ray tube (CRT), on which an image frame IF, which is the same as or similar to the pixel pattern image of the color film 50 of FIG. 3A, may be formed, and one or more mirrors 2600 for modifying an optical path so that the image frame IF formed on the display device 2500 may be transferred to the light sensitive color developing layers 20 of the printing support structure 100.

As described above with reference to FIG. 3A, the digital exposure device 2000 may include a lens system 2200 that may be disposed between the image frame IF and the printing support structure 100 and adapted to enlarge or reduce the image frame IF and project the enlarged or reduced image frame IF to the light sensitive color developing layers 20 of the printing support structure 100. The digital exposure device 2000 may further include additive and/or subtractive color filters 2400 for improving the color reproduction of the color filter.

In another embodiment, a digital exposure device, such as a micro-mirror type light projector, may be used. The digital exposure device includes a spatial light modulator constituted of an array of micro-mirrors which may be variably inclined to reflect light spots. Such micro-mirror type digital exposure devices are disclosed in Korean Patent Publication No. 1998-0052199, Japanese Patent Publication Nos. 9-164727 and 9-314910, and U.S. Patent Publication No. 2000/0017702. The digital exposure devices may include various exposure devices using a digital printing method which can expose a printing support structure by using electronically stored pixel pattern image information.

Since the digital printing method can easily design and modify pixel pattern image information by using a graphic software tool as compared to a printing method using a color film, the digital printing method can easily perform color correction so that the color filter has excellent color reproduction. Furthermore, since the digital printing method can implement separated exposure for different color pixel patterns by sequentially providing the image frames IF including only a pixel pattern of each color of the pixel pattern image to the display device 2500, latent images for forming first through third color pixel portions can be independently formed in the light sensitive color developing layers 20 of the printing support structure 100. Moreover, the digital printing method can perform additional exposure for any selected one color pixel pattern.

FIG. 4 is a cross-sectional view of a color filter 200 fabricated by the method of FIG. 1, according to an embodiment of the present invention. Referring to FIGS. 4 and 1, in operation S30, the printing support structure 100' having a latent image of the pixel pattern image may be developed. The development process of operation S30 may be selectively performed according to the material of the light sensitive color developing layers 20 of the used printing support structure 100'. If the light sensitive color developing layers 20 of the printing support structure 100' includes a silver halide as described above, a development process well known in photography technology may be used.

For example, the development process of operation S30 may be performed by using a developing solution, but not limited to, including metol, quinol, quinon, phenidon, any one of their derivatives, or a combination thereof. The silver halide of the light sensitive color developing layers 20 develops a color, when the silver halide reacts with the developing solution to be reduced to silver and to form an oxidized color developer Dox, and the oxidized color developer Dox reacts with a dye forming coupler included in the light sensitive color developing layers 20 to generate a dye deposit.

The developing solution may be provided in a bath that can adjust the temperature of the developing solution, and the exposed printing support structure 100' is dipped in the developing solution of the bath for a predetermined period of time. At this time, the developing solution may be stirred, and a development accelerator, such as peroxide or boron, may be added.

If the printing support structure 100' includes the red light sensitive color developing layer 21, the green light sensitive color developing layer 22 and the blue light sensitive color developing layer 23 and the light sensitive color developing layers 21, 22, and 23 include a Y dye forming coupler, an M dye forming coupler, and a C dye forming coupler, respectively, the first through third partial color developing regions 20R, 20G, and 20B defined by the exposure process of operation S20 develop colors by the development process of operation S30 to form the red, green, and blue pixel portions 200R, 200G, and 200B, respectively, as shown in FIG. 3A. If the pixel pattern image of the color film 50 or the image frame IF of the digital printing process has a color separation pattern portions 52I and the color separation pattern portions 521 are transparent to white light or are white, the fourth partial color developing regions 20I exposed to the white light in the exposure process of operation S20 may form the pixel separation regions 2001 having a black color due to the development process of operation S30.

The pixel separation regions 200I may perform a black matrix function to increase a pixel contrast ratio. Accordingly, the pixel separation regions 2001 may form a black matrix instead of or along with a matrix layer, as described above with reference to FIG. 2A. Although not shown in FIG. 4, the color filter 200 may include various additional layers 31, 32, 33, 34, and 35 in the printing support structure 100A, and also include the protective layer 40 formed on the color filter 200.

Referring again to FIG. 1, optionally, after the operation S30, a bleaching process may be further performed by using a well-known bleacher in order to remove unnecessary light sensitive color elements, e.g., darkened silver halide, in the light sensitive color developing layers 20 (operation S40). In operation S50, a fixing process may be further performed by using a fixer solution in order to remove silver halide crystal grains that are non-light sensitive color elements. The fixer solution may include sodium thiosulfate, ammonium thiosulfate, or a combination thereof. In operation S60, a rinsing process may be further performed between the bleaching process and the fixing process.

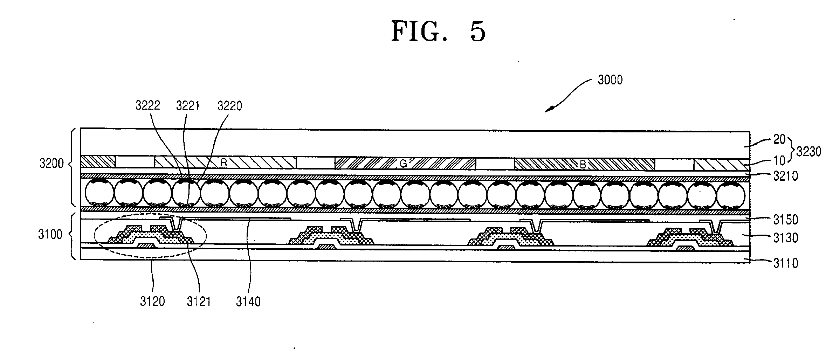

FIG. 5 is a cross-sectional view of an electrophoretic display (EPD) device 3000 including a color filter 3230, according to an embodiment of the present invention.

Referring to FIG. 5, the color filter 3230 may be applied to the EPD device 3000 which is a representative flexible display device. The EPD device 3000 may include a lower control unit 3100 and an upper display unit 3200. The lower control unit 3100 may include a flexible lower substrate 3110, TFTs 3120 formed on the lower substrate 3110 and acting as driving elements, and pixel electrodes 3140 electrically connected to source/drain electrodes 3121 of the TFTs 3120 through a protective layer 3130 for protecting the TFTs 3120.

The upper display unit 3200 may be attached to the lower display unit 3100 by an adhesive layer 3150. The upper display unit 3200 includes a common electrode 3210, and capsules 3220 each including charged pigment particles 3221 and 3222. The charged pigment particles 3221 and 3222 may be driven by the pixel electrodes 3140 of the lower control unit 3100 and the common electrode 3210. The color filter 3230 may be provided on the capsules 3220. The color filter 3230 may be disposed in a way where the substrate 10 of the color filter 3230 faces the outside of the of the EPD device 3000 and the light sensitive color developing layers 20 face the lower control unit 3100. Alternatively, the color filter 3230 may be provided between the capsules 3220 and the lower control unit 3100. The structure of the capsules 3320 shown in FIG. 5 is exemplary and the EPD device 3000 is in agreement with the present invention.

It should be noted that the color filter 3230 may be applicable to other electronic paper, such as a liquid toner display device and a magnetic ball display device which are often used as black and white display devices. Even in these display devices, the color filter 3230 may be disposed in a way where the substrate 10 of the color filter 3230 faces the outside of the display devices and the light sensitive color developing layers 20 face a substrate of the display devices on which various control elements and/or light emitting elements are mounted. Alternatively, the color filter 3230 may be provided in the display devices.

It is understood to one of ordinary skill in the art that the color filter according to the present invention can be applied to an organic or inorganic electroluminescent display or a plasma display panel as well as the electronic paper and the LCD device. It is also understood for one of ordinary skill in the art that the color filter according to the present invention can be applied to an image pickup device, such as a complementary metal oxide semiconductor (CMOS) image sensor or a charge coupled device (CCD).

## Claims

1. A color filter comprising:
a substrate (10a, 10b 10c); and
at least one light sensitive color developing layer (21, 22, 23) stacked on the substrate, the at least one light sensitive color developing layer having pixel portions (200R, 200G, 200B),
wherein the pixel portions are defined by partial color developing regions (20R, 20G, 20B) formed by exposure and development of the at least one light sensitive color developing layer,
wherein the at least one light sensitive color developing layer comprises any of silver halide crystal grain, chrome salt, ferric chloride II, diazo compound, and σ-quinine diazide, and
wherein the at least one light sensitive color developing layer further comprises a dispersed dye forming coupler and a binder.

2. The color filter of claim 1, wherein the at least one light sensitive color developing layer comprises at least one of a cyan color developing layer, a magenta color developing layer, and a yellow color developing layer, and the partial color developing regions of the color developing layers overlap one another to form the pixel portions.

3. The color filter of claim 1, further comprising a color filter layer assisting for at least one of the light sensitive color developing layers.

4. The color filter of claim 1, further comprising an anti-crosstalk interlayer formed between the at least one of light sensitive color developing layers.

5. A method of fabricating a color filter, the method comprising:
preparing a printing support structure (100A, 100B, 100C) comprising a substrate (10a, 10b, 10c) and at least one light sensitive color developing layer (20a, 20b 20c) stacked on the substrate;
performing a light exposure process to transfer a pixel pattern image to the at least one light sensitive color developing layer; and
performing a development process to develop the transferred pixel pattern image transferred of the at least one light sensitive color developing layer,
wherein the at least one light sensitive color developing layer comprises any of silver halide crystal grain, chrome salt, ferric chloride II, diazo compound, and σ-quinine diazide, or any combination thereof, and
wherein the at least one light sensitive color developing layer further comprises a dispersed dye forming coupler and a binder.

6. The method of claim 5, wherein the printing support structure further comprises a color filter layer assisting the at least one light sensitive color developing layer.

7. The method of claim 5, wherein the printing support structure further comprises an anti-crosstalk interlayer formed between the light sensitive color developing layers.

8. The method of claim 7, wherein the anti-crosstalk interlayer is a non-light sensitive interlayer or a low speed light sensitive layer.

9. A display device comprising:
the color filter according to any one of claims 1 to 4.

10. The display device of claim 9, further comprising a light emitting element formed on or in the substrate.

11. The display device of claim 9, further comprising a driving element formed on or in the substrate.

12. The display device of claim 9, being any one selected from the group consisting of an electronic paper device, a liquid crystal display, an organic or inorganic electroluminescent device, and a plasma display panel.

13. The display device of claim 12, wherein the liquid crystal display is a color filter-on-array type liquid crystal display.

## Patentansprüche

1. Ein Farbfilter, aufweisend:
• ein Substrat (10a, 10b, 10c); und
• mindestens eine lichtempfindliche Farbentwicklungsschicht (21, 22, 23), gestapelt auf dem Substrat, wobei die mindestens eine lichtempfindliche Farbentwicklungsschicht Pixelbereiche (200R, 200G, 200B) aufweist,
• wobei die Pixelbereiche mittels Teilfarbentwicklungsbereichen (20R, 20G, 20B), gebildet mittels Belichtens und Entwickelns der mindestens einen lichtempfindlichen Farbentwicklungsschicht, definiert sind,
• wobei die mindestens eine lichtempfindliche Farbentwicklungsschicht aufweist eines von: einem Silberhalogenid-Kristallkorn, einem Chromsalz, einem Eisen(II)chlorid, einer Diazoverbindung und einem σ-Chinindiazid, und
• wobei die mindestens eine lichtempfindliche Farbentwicklungsschicht ferner einen dispergierten Farbstoff, der Koppler und ein Bindemittel bildet, aufweist.

2. Der Farbfilter gemäß Anspruch 1,
wobei die mindestens eine lichtempfindliche Farbentwicklungsschicht mindestens aufweist eine von:
einer Cyan-Farbentwicklungsschicht,
einer Magenta-Farbentwicklungsschicht und
einer Gelb-Farbentwicklungsschicht, und die Teilfarbentwicklungsbereiche der
Farbentwicklungsschichten überlappen einander derart,
dass die Pixelbereiche gebildet werden.

3. Der Farbfilter gemäß Anspruch 1,
ferner aufweisend eine Farbfilterschicht, die mindestens eine der lichtempfindlichen Farbentwicklungsschichten unterstützt.

4. Der Farbfilter gemäß Anspruch 1,
ferner aufweisend eine Anti-Überlagerungszwischenschicht, gebildet zwischen der mindestens einen der lichtempfindlichen Farbentwicklungsschichten.

5. Ein Verfahren zum Herstellen eines Farbfilters, wobei das Verfahren aufweist:
• Bereitstellen einer Druckunterstützungsstruktur (100A, 100B, 100C), die ein Substrat (10a, 10b, 10c) und mindestens eine lichtempfindliche Farbentwicklungsschicht (20a, 20b, 20c), gestapelt auf dem Substrat, aufweist;
• Durchführen eines Belichtungsprozesses derart, dass ein Pixelbildmuster an die mindestens eine lichtempfindliche Farbentwicklungsschicht übertragen wird; und
• Durchführen eines Entwicklungsprozesses derart, dass das übertragene Pixelbildmuster, übertragen von der mindestens einen lichtempfindlichen Farbentwicklungsschicht, entwickelt wird,
• wobei die mindestens eine lichtempfindliche Farbentwicklungsschicht aufweist eines von:
einem Silberhalogenid-Kristallkorn,
einem Chromsalz, einem Eisen(II)-chlorid,
einer Diazoverbindung und einem σ-Chinindiazid,
oder eine Kombination davon, und
• wobei die mindestens eine lichtempfindliche Farbentwicklungsschicht ferner einen dispergierten Farbstoff, der Koppler und ein Bindemittel bildet, aufweist.

6. Das Verfahren gemäß Anspruch 5,
wobei die Druckunterstützungsstruktur ferner eine Farbfilterschicht, welche die mindestens eine lichtempfindliche Farbentwicklungsschicht unterstützt,
aufweist.

7. Das Verfahren gemäß Anspruch 5,
wobei die Druckunterstützungsstruktur ferner eine Anti-Überlagerungszwischenschicht, gebildet zwischen den lichtempfindlichen Farbentwicklungsschichten, aufweist.

8. Das Verfahren gemäß Anspruch 7,
wobei die Anti-Überlagerungszwischenschicht eine nicht-lichtempfindliche Zwischenschicht oder eine lichtempfindliche Schicht mit geringer Empfindlichkeit ist.

9. Eine Anzeigevorrichtung, aufweisend:
den Farbfilter gemäß einem der Ansprüche 1 bis 4.

10. Die Anzeigevorrichtung gemäß Anspruch 9,
ferner aufweisend ein lichtemittierendes Element, gebildet auf oder in dem Substrat.

11. Die Anzeigevorrichtung gemäß Anspruch 9,
ferner aufweisend ein Treiberelement, gebildet auf oder in dem Substrat.

12. Die Anzeigevorrichtung gemäß Anspruch 9,
die eine ist, ausgewählt aus der Gruppe, bestehend aus:
einer Elektronischen-Papier Vorrichtung,
einer Flüssigkristallanzeige, einer organischen oder
einer anorganischen Elektrolumineszenzvorrichtung und
einem Plasmabildschirm.

13. Die Anzeigevorrichtung gemäß Anspruch 12,
wobei die Flüssigkristallanzeige eine Farbfilter-auf-Array-Typ Flüssigkristallanzeige ist.

## Revendications

1. Filtre de couleur comprenant :
un substrat (10a, 10b 10c) ; et
au moins une couche de développement de la couleur sensible à la lumière (21, 22, 23) empilée sur le substrat, la ou les couches de développement de la couleur sensibles à la lumière présentant des parties de pixels (200R, 200G, 200B);
dans lequel les parties de pixels sont définies par des régions de développement de la couleur partielles (20R, 20G, 20B) formées par l'exposition et le développement de la ou des couches de développement de la couleur sensibles à la lumière ;
dans lequel la ou les couches de développement de la couleur sensibles à la lumière comprennent un grain cristallin d'halogénure d'argent, un sel de chrome, un chlorure ferrique II, un composé diazoïque ou un diazide de σ - quinine ; et
dans lequel la ou les couches de développement de la couleur sensibles à la lumière comprennent en outre un colorant dispersé qui forme un agent de couplage et de liaison.

2. Filtre de couleur selon la revendication 1, dans lequel la ou les couches de développement de la couleur sensibles à la lumière comprennent au moins une couche de développement de la couleur cyan, une couche de développement de la couleur magenta ou une couche de développement de la couleur jaune, et les régions de développement de la couleur partielles des couches de développement de la couleur se chevauchent les unes les autres de façon à former les parties de pixels.

3. Filtre de couleur selon la revendication 1, comprenant en outre une couche de filtre de couleur qui aide au moins l'une des couches de développement de la couleur sensibles à la lumière.

4. Filtre de couleur selon la revendication 1, comprenant en outre une couche intermédiaire antidiaphonie formée entre les couches de développement de la couleur sensibles à la lumière.

5. Procédé de fabrication d'un filtre de couleur, le procédé comprenant les étapes consistant à :
préparer une structure de support d'impression (100A, 100B, 100C) qui comprend un substrat (10a, 10b, 10c) et au moins une couche de développement de la couleur sensible à la lumière (20a, 20b 20c) empilée sur le substrat ;
exécuter un procédé d'exposition à la lumière de façon à transférer une image de motif de pixel sur la ou les couches de développement de la couleur sensibles à la lumière ; et
exécuter un procédé de développement destiné à développer l'image de motif de pixel transférée de la ou des couches de développement de la couleur sensibles à la lumière ;
dans lequel la ou les couches de développement de la couleur sensibles à la lumière comprennent un grain cristallin d'halogénure d'argent, un sel de chrome, un chlorure ferrique II, un composé diazoïque ou un diazide de σ - quinine, ou n'importe quelle combinaison de ceux-ci ;
dans lequel la ou les couches de développement de la couleur sensibles à la lumière comprennent en outre un colorant dispersé qui forme un agent de couplage et de liaison.

6. Procédé selon la revendication 5, dans lequel la structure de support d'impression comprend en outre une couche de filtre de couleur qui aide la ou les couches de développement de la couleur sensibles à la lumière.

7. Procédé selon la revendication 5, dans lequel la structure de support d'impression comprend en outre une couche intermédiaire antidiaphonie formée entre les couches de développement de la couleur sensibles à la lumière.

8. Procédé selon la revendication 7, dans lequel la couche intermédiaire antidiaphonie est une couche intermédiaire non sensible à la lumière ou une couche sensible à la lumière à faible vitesse.

9. Dispositif d'affichage comprenant:
le filtre de couleur selon l'une des revendications 1 à 4.

10. Dispositif d'affichage selon la revendication 9, comprenant en outre un élément électroluminescent formé sur ou dans le substrat.

11. Dispositif d'affichage selon la revendication 9, comprenant en outre un élément de commande formé sur ou dans le substrat.

12. Dispositif d'affichage selon la revendication 9, sélectionné dans le groupe constitué par un dispositif à papier électronique, un affichage à cristaux liquides, un dispositif électroluminescent organique ou inorganique, et un panneau d'affichage à plasma.

13. Dispositif d'affichage selon la revendication 12, dans lequel l'affichage à cristaux liquides est un affichage à cristaux liquides du type à filtre de couleur sur réseau.
